# EUROPEAN PATENT SPECIFICATION

(11) **EP 2 143 994 B1**
(45) Date of publication and mention of the grant of the patent: **04.05.2011**
(21) Application number: 09165188.5
(22) Date of filing: 10.07.2009
(51) Int. Cl.: F21V 14/06

(54) **Lighting device for vehicle**
Beleuchtungsvorrichtung für Fahrzeug
Dispositif d'éclairage pour véhicule

(30) Priority: 11.07.2008 JP 2008181023
(43) Date of publication of application: 13.01.2010
(73) Proprietor: Koito Manufacturing Co., Ltd., Tokyo 108-8711 (JP)
(72) Inventor: Tsukamoto, Michio, Shizuoka-shi, Shizuoka (JP)
(74) Representative: Intès, Didier Gérard André

(56) References cited:
- DE-A1-102004 002 280
- FR-A1- 2 882 589
- US-A1- 2003 090 905

## Description

### TECHNICAL FIELD

The present invention relates to a lighting device for a vehicle. The lighting device includes a light distribution forming reflector taking a shape of a paraboloid and a light emitting device as a light source disposed on a focal point of the reflector. The light distribution forming reflector and the light emitting device are provided in a lamp housing formed by a lamp body and a front cover. The lighting device can switch a light distribution formed by the reflector into a headlamp mode and a marker lamp mode by increasing/decreasing a current to be supplied to the light emitting device through a dimming portion.

### RELATED ART

JP-A-2004-276740 Publication describes a related art lighting device for a vehicle which includes a plurality of projection type light source units in which a reflector, an LED as a light source, and a projection lens are integrated in a lamp housing formed by a lamp body and a front cover. The related art lighting device is configured to enable an increase/decrease in a current to be supplied to the LED of each of the light source units through a dimming portion (a current control portion), and can alternatively carry out switching into a headlamp mode for increasing a quantity of a light emitted from each LED and a side lamp mode for reducing the quantity of the light emitted from the LED by means of a change-over switch provided on a control panel of a driver's seat.

The document US 2003/0090905 discloses the preamble of claim 1. The related art lighting device for a vehicle can be utilized in the headlamp mode having a large quantity of the light emitted from the LED or the side lamp mode having the small quantity of the light emitted from the LED by increasing/decreasing the current to be supplied to the LED by means of the dimming portion (the current control portion). However, an optical explanation for a light distribution in a headlamp and a side lamp has not been provided and there is a problem in that a practical use cannot be carried out in this state.

More specifically, a light distribution required for the headlamp and a light distribution required for a marker lamp such as the side lamp are completely different from each other depending on functions demanded for the respective lighting devices. In the headlamp, it is necessary to form a light distribution pattern which can illuminate a forward predetermined region of the lighting device to be bright in respect of a function of an illuminating lamp to maintain an excellent forward visibility for a driver. On the other hand, in the marker lamp, it is desirable to lead a light into a range which is as wide as possible in vertical and transverse directions of a forward part of the lighting device in respect of a function to maintain an excellent visibility for a car running on an opposing lane or a pedestrian.

### SUMMARY

Therefore, the inventor thought that a diffusion lens is preferably provided to enable an insertion operation and a removal operation with respect to a light distribution forming optical path for light emitted from the LED in order to cause the lighting device functioning as the headlamp to function as the marker lamp. However, in the projection type related art light source unit described above, there is employed a structure in which the LED is disposed on a second focal position of the reflector taking an almost ellipsoidal shape and the projection lens is integrated through a lens holder in a forward part of the reflector. Accordingly, there is not sufficient space in which a diffusion lens may be provided to enable the insertion and removal operations. On the other hand, in a refection type light source unit in which an LED is disposed in a focal position of a light distribution forming reflector taking a shape of a paraboloid, it was thought that a forward part of the reflector is opened greatly and a diffusion lens can be provided.

The invention has been made based on the problems of the related art and the knowledge of the inventor, and has an object to provide a lighting device for a vehicle which can alternatively switch between a headlamp mode having an excellent visibility and a marker lamp mode having an excellent visibility, by controlling an increase/decrease in a current to be supplied to a light emitting device through a dimming portion and by moving a diffusion lens with respect to a reflector and the light emitting device.

In order to achieve the object, a first aspect of the invention is directed to a lighting device for a vehicle including a light distribution forming reflector taking a shape of a paraboloid and a light emitting device as a light source disposed on a focal point of the reflector in a lamp housing formed by a lamp body and a front cover,
switching into a headlamp mode having a first quantity of a light emitted from the light emitting device and a marker lamp mode having a second quantity of the light emitted from the light emitting device, the first quantity being larger than the second quantity, and the switching being enabled by a dimming portion for controlling an increase/decrease in a current to be supplied to the light emitting device,
wherein a diffusion lens capable of being moved into a position g between the light emitting device and the reflector is provided in the vicinity of the light emitting device.

(Function) In the case in which the lighting device for a vehicle is to function as a headlamp, the current to be supplied to the light emitting device is increased by the dimming portion to select the headlamp mode for increasing the quantity of a light emitted from the light emitting device and to set a configuration in which the diffusion lens is not positioned between the light emitting device and the reflector (i.e., a configuration in which the diffusion lens is not provided between the light emitting device and the reflector). Consequently, the light emitted from the light emitting device is reflected by the paraboloid shaped reflector and is changed into an almost parallel light having a high luminous flux density, resulting in a light distribution having an excellent visibility for illuminating a predetermined region in a forward part of the lighting device.

On the other hand, in the case in which the lighting device for a vehicle is to function as the marker lamp, the current to be supplied to the light emitting device is decreased by the dimming portion to select the marker lamp mode for reducing the quantity of a light emitted from the light emitting device and to set a configuration in which the diffusion lens is moved into a position between the light emitting device and the reflector (i.e., a configuration in which the diffusion lens is provided between the light emitting device and the reflector). Consequently, the light emitted from the light emitting device is diffused by transmission through the diffusion lens and is further diffused also in the reflection through the paraboloid shaped reflector and is thus changed into a diffused light having a low luminous flux density, resulting in a light distribution having an excellent visibility which is applied in a wide range in the forward part of the lighting device.

A second aspect of the invention is directed to the lighting device for a vehicle according to the first aspect of the invention, wherein position of the diffusion lens is linked to the mode switching operation through the dimming portion, and the marker lamp mode is set in a configuration in which the diffusion lens is moved into a position between the light emitting device and the reflector, and the headlamp mode is set in a configuration in which the diffusion lens is not positioned between the light emitting device and the reflector.

(Function) The diffusion lens is operated and moved into the position in which the diffusion lens is positioned outside of the portion between the light emitting device and the reflector at the same time as the operation for selecting the headlamp mode, and is operated and moved into the position in which the diffusion lens is positioned between the light emitting device and the reflector at the same time as the operation for selecting the marker lamp mode.

According to the first aspect of the invention, there is provided the lighting device for a vehicle which functions as the headlamp having an excellent visibility or the marker lamp having an excellent visibility by causing the diffusion lens to change positions based on whether the headlamp mode or the marker lamp mode are selected by the dimming portion.

According to the second aspect of the invention, the operation for switching the headlamp mode and the marker lamp mode through the dimming portion is linked to the operation for moving the diffusion lens between the light emitting device and the reflector. Therefore, by simply carrying out the operation for switching the headlamp mode and the marker lamp mode, it is possible to easily switch between the headlamp having an excellent visibility and the marker lamp having an excellent visibility.

### BRIEF DESCRIPTION OF THE DRAWINGS

Fig. 1 is a front view showing a headlamp for a car according to a first example of the invention,
Fig. 2 is a longitudinal sectional view of the headlamp taken along a line II - II in Fig. 1,
Fig. 3 is an enlarged longitudinal sectional view showing a third light source unit in a state in which a diffusion lens is moved to a position outside of a light emitting device and a reflector (in a high beam mode),
Fig. 4 is an enlarged longitudinal sectional view showing the third light source unit in a state in which the diffusion lens is moved to a position between the light emitting device and the reflector (in a day time running lamp (DTL) mode),
Fig. 5 is a perspective view showing the diffusion lens,
Fig. 6 is a diagram showing a structure of a dimming portion (a current control portion) of a light source unit,
Fig. 7 is a flowchart showing an operation of the dimming portion (the current control portion),
Fig. 8 is a view showing a light distribution pattern formed by the light source unit, (a) being a view showing a light distribution pattern for a low beam which is formed by first and second light source units and (b) being a view showing a light distribution pattern for a high beam which is formed by the third light source unit or a light distribution pattern for a DTL,
Fig. 9 is a perspective view showing a diffusion lens to be a main part of a headlamp for a car according to a second example of the invention, and
Fig. 10 is a longitudinal sectional view showing a third light source unit to be a main part of a headlamp for a car according to a third example of the invention.

### DETAILED DESCRIPTION

Next, an exemplary embodiment according to the invention will be described based on an example.

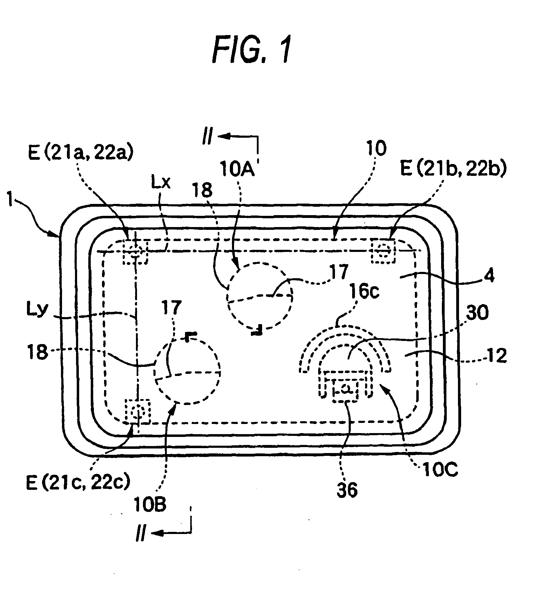

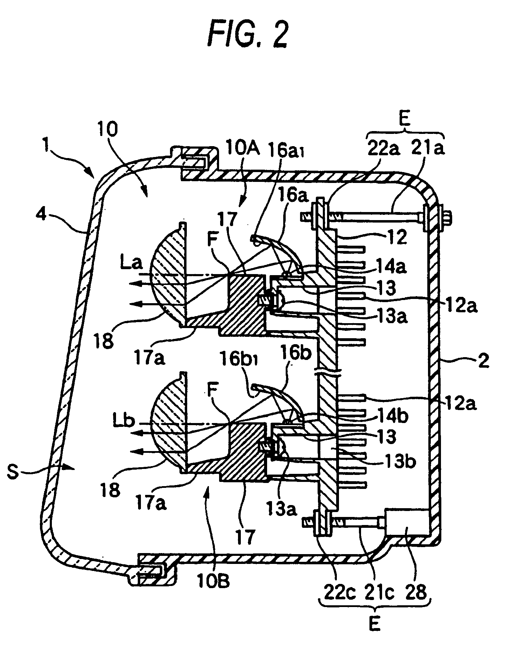

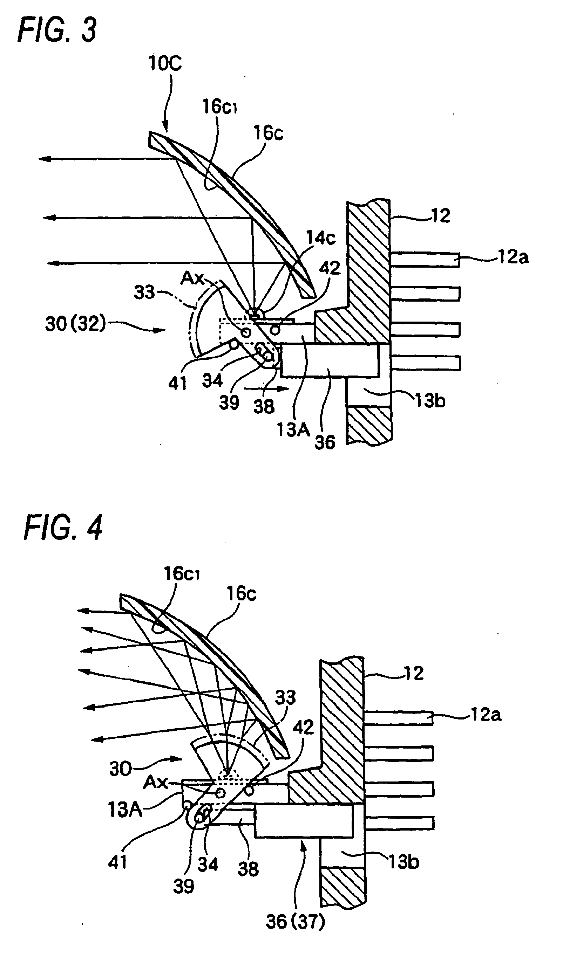

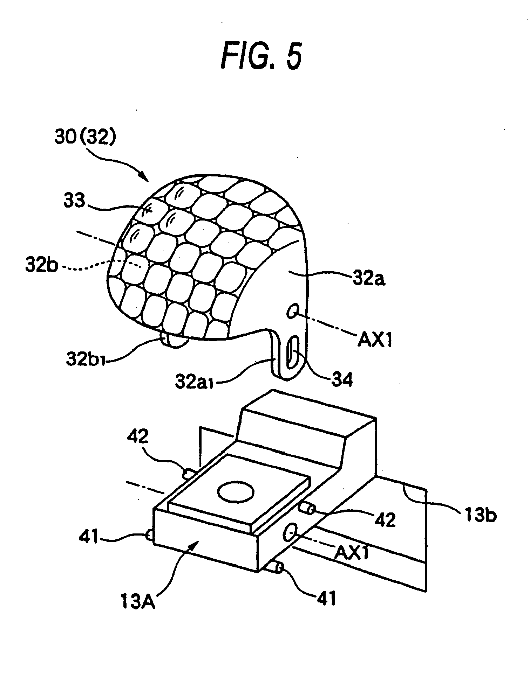

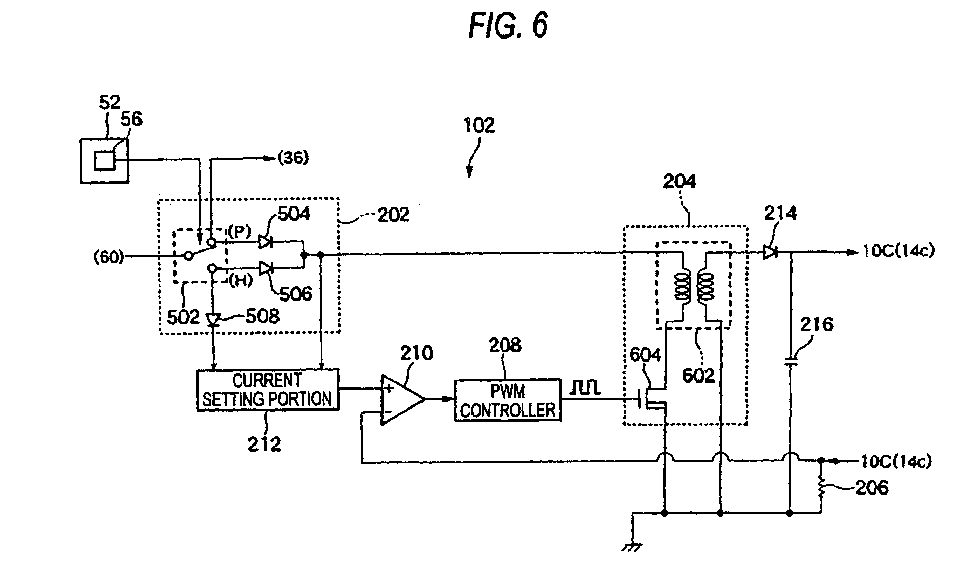

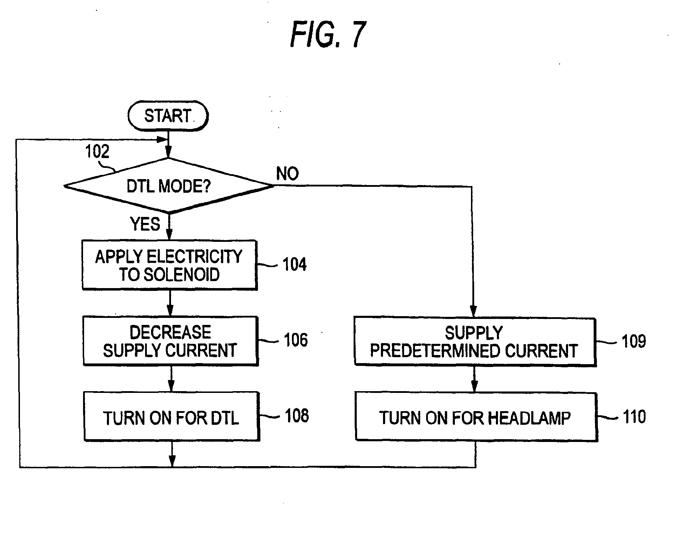

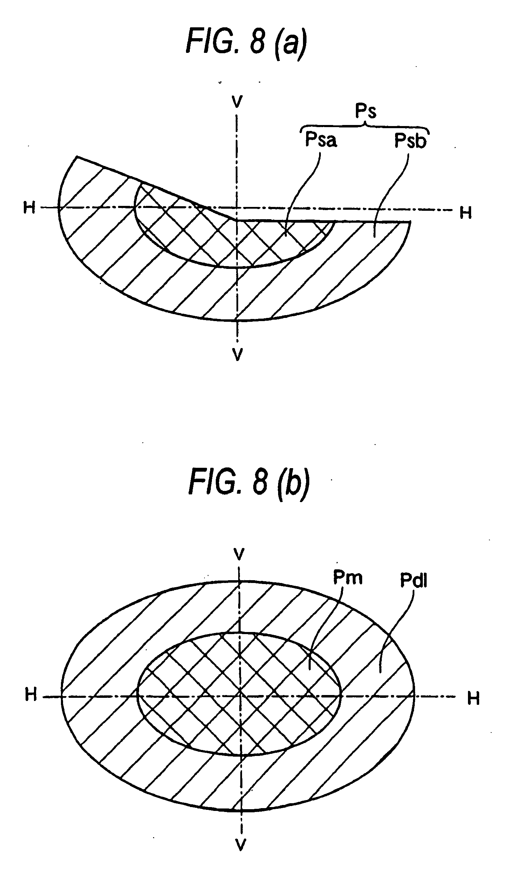

Figs. 1 to 8 show a headlamp for a car according to an example of the invention. Fig. 1 is a front view showing the headlamp for a car, Fig. 2 is a longitudinal sectional view of the headlamp taken along a line II - II in Fig. 1. Figs. 3 and 4 are enlarged longitudinal sectional views showing a light source unit, where Fig. 3 is a sectional view showing a state in which a diffusion lens moved to a position outside a light emitting device and a reflector (in a high beam mode), and Fig. 4 is a sectional view showing a state in which the diffusion lens is moved to a position between the light emitting device and the reflector (in a DTL mode). Fig. 5 is a perspective view showing the diffusion lens. Fig. 6 is a diagram showing a structure of a dimming portion (a current control portion) of a light source unit. Fig. 7 is a flowchart showing an operation of the dimming portion (the current control portion), and Fig. 8 is a view showing light distribution patterns formed by first, second and third light source units, (a) being a view showing a light distribution pattern for a low beam which is formed by the first and second light source units and (b) being a view showing a light distribution pattern for a high beam or a light distribution pattern for a DTL which is formed by the third light source unit.

In Figs. 1 to 4, a headlamp 1 for a car has a structure in which a light source unit assembly 10 having three light source units 10A, 10B and 10C integrated with a lamp bracket 12 is accommodated in a lamp housing S formed by a lamp body 2 taking a shape of a container and a transparent front cover 4. The light source unit assembly 10 is supported tiltably in a vertical direction through an auto-leveling mechanism E (an aiming mechanism) which is provided between the lamp bracket 12 and the lamp body 2.

More specifically, the auto-leveling mechanism E includes a pair of left and right aiming screws 2 1 a and 2 1 b supported rotatably on front and rear insertion holes provided on a back wall of the lamp body 2, aiming nuts 22a and 22b attached to the lamp bracket 12 in a screwing configuration into the aiming screws 21a and 21b, a leveling actuator 28 attached to a position placed under the aiming screw 21a at an inside of the back wall of the lamp body 2 and including a rotating and driving shaft 21c extended in parallel with the aiming screws 21a and 21b, and an aiming nut 22c attached to the lamp bracket 12 in a screwing configuration into a tip screw portion of the rotating and driving shaft 21c. The auto-leveling mechanism E has a structure in which the light source unit assembly 10 (the lamp bracket 12) is tiltable around a leveling shaft Lx (a shaft passing through the nuts 22a and 22b) by a driving operation of the actuator 28 (a rotating operation of the rotating and driving shaft 21c). The actuator 28 rotates the rotating and driving shaft 21c to move the aiming nut 22c forward and backward along the rotating and driving shaft 21c based on a signal sent from a center-of-gravity position detecting sensor (not shown) for detecting a movement in a longitudinal direction of a center-of-gravity position of a car, for example, and tilts the light source unit assembly 10 around the leveling shaft Lx to always maintain an optical axis of the headlamp 1 (the light source unit assembly 10) into a constant configuration with respect to a running road surface.

Moreover, the aiming screw 21b functions as a transverse aiming screw for tilting and adjusting the optical axis of the headlamp 1 around a vertical tilting axis Ly (an axis passing through the aiming nuts 22a and 22c), and the aiming screws 21a and 21b also function as vertical aiming screws for tilting and adjusting the optical axis of the headlamp 1 around a virtual horizontal tilting axis passing through the aiming nut 22c. Therefore, the auto-leveling mechanism E also acts as an aiming mechanism.

In the light source unit assembly 10, the first and second projection type light source units 10A and 10B for a low beam formation and the third reflection type light source unit 10C for a high beam formation are integrated apart from each other by predetermined distances in vertical and transverse directions at a front side of the lamp bracket 12 formed of a metal having a high thermal conductivity, for example, aluminum and taking an almost rectangular shape seen from a front.

The projection type light source units 10A and 10B include light emitting devices 14a and 14b as light sources attached to an upper surface of a protruded portion 13 which has a rectangular shape and protrudes toward a front side of the bracket 12; reflectors 16a and 16b formed by a resin, having an almost ellipsoidal shape, and attached onto the forward protruded portion 13 to cover the light emitting devices 14a and 14b; a cutoff line forming shade 17 formed by a resin and attached to a tip part of the forward protruded portion 13 with a screw 13a; and a projection convex lens 18 formed by a resin and attached to a tip of a forward extended portion 17a of the shade 17, respectively. The reference numeral 13b denotes an opening portion formed behind the forward protruded portion 13 and the reference numeral 12a denotes a radiator fin provided in predetermined positions on front and back sides of the lamp bracket 12.

As shown in Fig. 2, the projection type light source units 10A and 10b have optical axes La and Lb which extend longitudinally. Reflecting surfaces 16a1 and 16b1 of the reflectors 16a and 16b have major axes which are coaxial with the optical axes La and Lb and include curved surfaces taking an almost ellipsoidal shape with light emitting centers of the light emitting devices 14a and 14b set to be first focal points. The shade 17 is extended forward in an almost horizontal direction in such a manner that an upper front edge part thereof is positioned in the vicinity of a rear focal point F of the projection lens 18, and the projection convex lens 18 disposed on each of the optical axes La and Lb with the rear focal point F set to be almost coincident with a second focal point of each of the reflecting surfaces 16a1 and 16b1 projects, as an inverted image, an image on a focal plane including the rear focal point F onto a virtual vertical screen in front of the headlamp and forms a light distribution patters for a headlamp low beam having a predetermined clear cutoff line corresponding to a front edge of the shade 17 (see the reference numerals Psa and Psb in Fig. 8).

On the other hand, as shown in Figs. 3 and 5, the reflection type light source unit 11C includes a light distribution forming reflector 16c which is formed by a resin and has a reflecting surface 16c1 having a shape of a paraboloid, and is attached to an upper surface of a plate-shaped protruded portion 13A protruded toward the front side of the bracket 12, and a light emitting device 14c as a light source disposed on an almost focal position of the reflecting surface 16c1 of the reflector 16c, and forms a light distribution pattern for a headlamp high beam which is indicated as Pm in Fig. 8(b).

As shown in Figs. 3, 4 and 5, moreover, the reflection type light source unit 10C is provided with a diffusion lens 30 to contribute to form a light distribution for a day time running lamp (which will be hereinafter referred to as a DTL), and it is possible to switch a light distribution for the headlamp high beam and for the DTL by putting the diffusion lens 30 in/out from between the light emitting device 14c and the reflector 16c.

As shown in Fig. 5, the diffusion lens 30 includes a lens body 32 taking an almost spherical shape and having a surface on which a fish-eye convex step 33 is formed, and legs 32a1 and 32b1 are extended downward from left and right sidewalls 32a and 32b of the lens body 32, and the sidewalls 32a and 32b are pivotally supported on side surfaces of the protruded portion 13A of the bracket 12. Furthermore, the legs 32a1 and 32b1 are coupled to a sliding plunger 38 of a solenoid 36 (a diffusion lens driving actuator) attached to a lower surface of the protruded portion 13A. A fish-eye concave step may be formed on the surface of the lens body 32 in place of the fish-eye convex step 33.

More specifically, as shown in Figs. 3, 4 and 5, a horizontal pin 39 extended transversely is protruded from a tip part of the sliding plunger 38 which is subjected to a detention in a circumferential direction with respect to a solenoid body 37 and can carry out forward and backward moving operations, and is engaged with slots 34 and 34 formed on the legs 32a1 and 32b1 of the diffusion lens body 32 so that the diffusion lens 30 (the lens body 32) is smoothly rotated (rocked) around a pivotal support shaft Ax without an unsteadiness by the forward and backward moving operations of the sliding plunger 38.

The reference numerals 41 and 42 denote first and second stopper portions for positioning the diffusion lens, the stopper portions being protruded from left and right side surfaces of the protruded portion 13A of the bracket 12, and the diffusion lens 30 (the lens body 32) abuts on either the stopper portion 41 or the stopper portion 42 and is thus positioned relative to the light emitting device 14c and the reflector 16c.

In other words, the diffusion lens 30 is always biased in a counterclockwise direction in Fig. 3 to abut on the first stopper portion 41 by means of a spring member (not shown) provided between the pivotal support shaft Ax and the second stopper portion 42. In a non-conducting state of the solenoid 36, therefore, the diffusion lens 30 is set to a non-embedded configuration in which the diffusion lens 30 is not embedded between the light emitting device 14c and the reflector 16c (i.e., a configuration in which the diffusion lens 30 is in a position in which the diffusion lens 30 is not positioned between the light emitting device 14c and the reflector 16c) and is held in a predetermined position in which a light distribution formed by the reflector 16c is not shielded as shown in Fig. 3. When the light source unit 10C is turned ON in this state, the light emitted from the light emitting device 14c is directly led to the reflector 16c taking the shape of a paraboloid, resulting in a formation of a light distribution pattern for a headlamp high beam which illuminates a predetermined region in a forward part of the lighting device (see the reference numeral Pm in Fig. 8(b)).

On the other hand, with the conduction of the solenoid 36, the sliding plunger 38 is moved forward. The diffusion lens 30 is rotated (rocked) against a spring energizing force in a clockwise direction around the pivotal support shaft Ax in Fig. 4 to a position in which the diffusion lens 30 abuts on the stopper portion 42 by the forward moving operation of the sliding plunger 38. The diffusion lens 30 is held in an embedded configuration in which the diffusion lens 30 is moved to a position (is embedded) between the light emitting device 14c and the reflector 16c (i.e., a configuration in which the diffusion lens 30 is provided between the light emitting device 14c and the reflector 16c) as shown in Fig. 4. When the light source unit 10C is turned ON in this state, the light emitted from the light emitting device 14c is diffused in a transmission through the diffusion lens 30, and is diffused in a reflection through the reflector 16c, resulting in a formation of a light distribution pattern of the DTL (see the reference numeral Pdt1 in Fig. 8(b)) which is diffused into a wide range in vertical and transverse directions in front of the lighting device. When the conduction to the solenoid 36 is stopped, the diffusion lens 30 and the sliding plunger 36 are retuned into original positions shown in Fig. 3 by the spring energizing force acting on the diffusion lens 30.

Moreover, a control panel 52 on a driver's seat of a car is provided with a mode change-over switch 56 for switching between a high beam mode of the headlamp and a DTL mode. A current control portion 102 is provided between the control panel 52 (i.e., the mode change-over switch 56) and the light source unit 10C (the light emitting device 14c) as shown in Fig. 6. The current control portion 102 serves as dimming portion for controlling (ON/OFF) a driving operation of the solenoid 36 and controlling an increase/decrease in a current to be supplied to the light emitting device 14c of the reflection type light source unit 10C based on a signal (a signal indicating which mode is to be selected) sent from the control panel 52 (the mode change-over switch 56).

More specifically, the current control portion 102 includes a switching portion 202, a current setting portion 212, a resistor 206, an operational amplifier 210, a pulse width modulation (PWM) controller 208, a switching regulator 204, a diode 214, and a capacitor 216 as shown in Fig. 6.

The switching portion 202 includes a change-over switch 502 and a plurality of diodes 504, 506 and 508. The change-over switch 502 receives, from the control panel 52 (the mode change-over switch 56), an instruction indicating whether the light source unit 10C is to be turned ON, and switches whether a power output from a battery 60 is to be output to either a terminal (P) or a terminal (H) in response to the instruction.

Moreover, the terminal (P) is connected to the solenoid 36. In the case in which the light source unit 10C is set to a headlamp high beam, for example, the change-over switch 502 electrically connects the battery 60 to the terminal (H). The solenoid 36 is not connected to the battery 60 and the diffusion lens 30 holds a configuration shown in Fig. 3 (the configuration for a formation of the headlamp high beam). On the other hand, in the case in which the light source unit 10C set to the DTL, the change-over switch 502 electrically connects the battery 60 to the terminal (P). Consequently, power is supplied to the solenoid 36. Thus, the sliding plunger 38 is moved forward so that the diffusion lens 30 is moved from the position for formation of the headlamp high beam shown in Fig. 3 to the position for formation of a DTL beam shown in Fig. 4.

Moreover, the terminals (P) and (H) are electrically connected to respective anodes of the diodes 504 and 506. Respective cathodes of the diodes 504 and 506 are electrically connected to each other and are electrically connected to the switching regulator 204 and the current setting portion 212.

An anode and a cathode of the diode 508 are electrically connected to the terminal (H) and the current setting portion 212, respectively. In the case in which the light source unit 10C is set to the headlamp high beam, the diode 508 outputs a signal having an H level. On the other hand, in the case in which the light source unit 10C is set to the DTL, the diode 508 outputs a signal having an L level. More specifically, the switching portion 202 transmits, to the current setting portion 212, an instruction indicating whether the light source unit 10C is to be set to either the headlamp high beam or the DTL.

The current setting portion 212 sets a magnitude of a supply current based on the instruction received from the control panel 52 (the mode change-over switch 56) through the switching portion 202 and applies a voltage corresponding to the magnitude of the supply current thus set to a positive input of the operational amplifier 210.

The resistor 206 is connected downstream of the light emitting device 14c and generates, on both terminals, a voltage corresponding to the magnitude of the current to be supplied to the light emitting device 14c. Moreover, the resistor 206 has one terminal which is grounded and has another terminal connected electrically to a negative input of the operational amplifier 210. Consequently, the resistor 206 applies, to the negative input of the operational amplifier 210, a voltage corresponding to the magnitude of the current to be supplied to the light emitting device 14c.

The operational amplifier 210 compares the magnitude of the supply current which is set by the current setting portion 212 with that of the current supplied to the light emitting device 14c based on the voltages received by the positive and negative inputs respectively from the current setting portion 212 and the resistor 206, and gives a result of the comparison to the PWM controller 208. The PWM controller 208 sends, to the switching regulator 204, a pulse signal having a pulse width based on the result of the comparison. The PWM controller 208 modulates the pulse width depending on an output of the operational amplifier 210, thereby changing an output of the switching regulator 204 and causing the switching regulator 204 to output a supply current having the magnitude set by the current setting portion 212.

The switching regulator 204 includes a transformer 602 and a switch 604. A primary coil of the transformer 602 receives a power from the battery 60 through the switching portion 202 and is grounded through the switch 604. Moreover, a secondary coil of the transformer 602 is electrically connected to the light emitting device 14c through the diode 214 and supplies a current smoothed by the capacitor 216 to the light emitting device 14c.

The switch 604 is an NMOS transistor connected in series to the primary coil of the transformer 602 and receives a pulse signal output from the PWM controller 208 at a gate terminal. For this reason, the switch 604 is repetitively turned ON/OFF in response to the pulse signal and defines a current flowing to the primary coil of the transformer 602. Consequently, the switch 604 changes the current flowing to the primary coil of the transformer 602 corresponding to a pulse width of the pulse signal.

In this case, the secondary coil of the transformer 602 provides, to the light emitting device 14c, a supply current having a magnitude set by the current setting portion 212 depending on the pulse width of the pulse signal. Consequently, the switching regulator 204 supplies, to the light emitting device 14c, the supply current based on an instruction received from the control panel 52.

Fig. 7 is a flowchart showing an example of an operation of the current control portion 102.

At Operation 102, the current control portion 102 decides whether the light source unit 10C is to be set to either the DTL mode or the headlamp high beam mode based on an instruction received from the control panel 52 (the mode change-over switch 56). At this time, the solenoid 36 is not conducted, and the diffusion lens 30 is forward energized and therefore is not provided between the light emitting device 14c and the reflector 16c as shown in Fig. 3.

If it is determined at Operation 102 that the DTL mode is selected, the current control portion 102 provides power to the solenoid 36 at Operation 104. Consequently, the plunger 38 of the solenoid 36 is moved forward so that the diffusion lens 30 (the lens body 32) is rocked rearward up to a position in which the diffusion lens 30 abuts on the second stopper portion 42. Thus, there is set a configuration in which the diffusion lens 30 (the lens body 32) is provided between the light emitting device 14c and the reflector 16c (see Fig. 4).

The current control portion 102 decreases the current to be supplied to the light emitting device 14c at Operation 106, and turns ON the light emitting device 14c (the light source unit 10C) as the DTL at Operation 108. More specifically, the light emitting device 14c (the light source unit 10C) is turned ON, resulting in a formation of a diffused light for the DTL having a low luminous flux density and an excellent visibility which is led into a wide range in the forward part of the lighting device.

On the other hand, when it is determined at Operation 102 that the headlamp high beam mode is selected, the current control portion 102 does not provide power to the solenoid 36 but a predetermined current for the headlamp high beam is supplied to the light emitting device 14c at Operation 109, and the light source unit 10C is turned ON at Operation 110. More specifically, in a state of non-conduction of the solenoid 36, the diffusion lens 30 (the lens body 32) remains biased in a configuration in which the diffusion lens 30 abuts on the first stopper portion 41 and the diffusion lens 30 (the lens body 32) is not provided between the light emitting device 14c and the reflector 16c (see Fig. 3). Therefore, the light emitting device 14c (the light source unit 10C) is turned ON, resulting in a formation of a light distribution for the headlamp high beam which has a high luminous flux density and an excellent visibility.

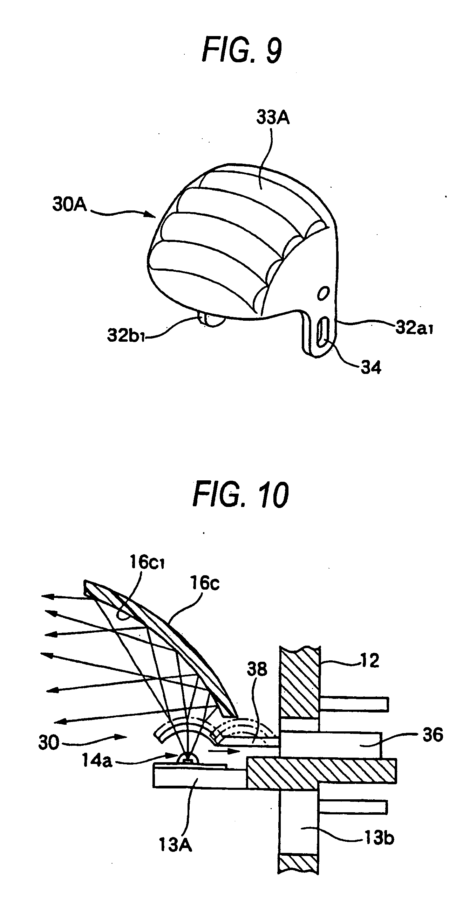

Fig. 9 is a perspective view showing a diffusion lens to be a main part of a headlamp for a vehicle according to a second example of the invention.

Although the diffusion step of the diffusion lens 30 is constituted by the fish-eye step 33 in the first example, a diffusion step of a diffusion lens 30A according to the second example is constituted by a cylindrical step 33A extended transversely as shown.

Fig. 10 is a longitudinal sectional view showing a third light source unit to be a main part of a headlamp for a vehicle according to a third example of the invention.

Although the diffusion lens 30 is constituted rotatably (rockably) around the pivotal support shaft Ax in the first example, a diffusion lens 30 is integrated with a tip part of a sliding plunger 38 of a solenoid 36 so that the diffusion lens 30 can be slid in a longitudinal direction integrally with a driving operation of the solenoid 36 (forward and backward moving operations of the sliding plunger 38) in the third example.

More specifically, in a non-conduction of the solenoid 36 in which a DTL mode is selected, the diffusion lens 30 is brought into a configuration in which the diffusion lens 30 is disposed behind a reflector 16c and is not embedded between a light emitting device 14c and the reflector 16c, as shown by a double-dot dash line of Fig. 10. In a conduction of the solenoid 36 in which a headlamp high beam mode is selected, the diffusion lens 30 is brought into a configuration in which the diffusion lens 30 is embedded between the light emitting device 14c and the reflector 16c as shown by a solid line of Fig. 10.

Although there is employed the structure in which the control of the increase/decrease in the current to be supplied to the light emitting device 14c (the selection of the light distribution mode) and the control of the conduction to the solenoid 36 (the ON/OFF control) are linked to each other through the current control portion 102 in the examples, it is also possible to employ a structure in which the control of the conduction to the solenoid 36 (the ON/OFF control) is carried out independently of the control of the increase/decrease in the current to be supplied to the light emitting device 14c (the selection of the light distribution mode).

Although there is employed the structure in which the light distribution of the light source unit 10C is switched into the headlamp high beam and the DTL beam in the examples, the invention is not restricted thereto. For example, it is possible to apply the invention to a combination of various beams for an illuminating lamp and a marker lamp, for example, a beam for a fog lamp and a beam for a clearance lamp, a headlamp high beam and a beam for a clearance lamp, or a beam for a fog lamp and a beam for a DTL.

## Claims

1. A lighting device for a vehicle comprising:
a lamp housing (S) comprising a lamp body (2) and a front cover (4):
a light distribution forming reflector (16c) having a paraboloid shape;
a light emitting device (14c) disposed on a focal point of the reflector, the light distribution forming reflector and the light emitting device being contained in the lamp housing;
a dimming portion (102) which controls a current to be supplied to the light emitting device, and performs a mode switching operation for switching into a headlamp mode having a first quantity of a light emitted from the light emitting device and a marker lamp mode having a second quantity of the light emitted from the light emitting device, the first quantity being larger than the second quantity;
**characterised by**
a diffusion lens (30) which is provided in the vicinity of the light emitting device and is capable of being moved between an embedded configuration and a non-embedded configuration with respect to the light emitting device and the reflector.

2. The lighting device for a vehicle according to claim 1, wherein the embedded configuration and the non-embedded configuration of the diffusion lens (30) are linked to the mode switching operation through the dimming portion (102), the marker lamp mode is set in the embedded configuration in which the diffusion lens is embedded between the light emitting device and the reflector, and the headlamp mode is set in the non-embedded configuration in which the diffusion lens is not embedded between the light emitting device and the reflector.

## Patentansprüche

1. Leuchtvorrichtung für ein Fahrzeug, umfassend:
ein Lampengehäuse (S) mit einem Lampenkörper (2) und einer vorderen Abdeckung (4),
einen eine Lichtverteilung erzeugenden Reflektor (16c) mit einer Paraboloidform,
eine lichtemittierende Vorrichtung (14c), die in einem Brennpunkt des Reflektors angeordnet ist, wobei der eine Lichtverteilung erzeugende Reflektor und die lichtemittierende Vorrichtung in dem Lampengehäuse enthalten sind, und
einen Dimmabschnitt (102), der einen zur lichtemittierenden Vorrichtung zugeführten Strom steuert und eine Betriebsmodusumschaltung zum Schalten in einen Scheinwerfermodus mit einer von der lichtemittierenden Vorrichtung emittierten ersten Lichtmenge und in einen Markierungslichtmodus mit einer von der lichtemittierenden Vorrichtung emittierten zweiten Lichtmenge durchführt, wobei die erste Menge größer als die zweite Menge ist,
**gekennzeichnet durch**
eine Streulinse (30), die in der Nähe der lichtemittierenden Vorrichtung angeordnet ist und die in der Lage ist, zwischen einer bezüglich der lichtemittierenden Vorrichtung und des Reflektors dazwischen angeordneten Konfiguration und einer nicht dazwischen angeordneten Konfiguration bewegt zu werden.

2. Leuchtvorrichtung für ein Fahrzeug nach Anspruch 1, wobei die dazwischen angeordnete Konfiguration und die nicht dazwischen angeordnete Konfiguration der Streulinse (30) mit der Betriebsmodusumschaltung über den Dimmabschnitt (102) verknüpft sind, wobei der Markierungslichtmodus als die dazwischen angeordnete Konfiguration, in welcher die Streulinse zwischen der lichtemittierenden Vorrichtung und dem Reflektor angeordnet ist, gesetzt wird, und der Scheinwerfermodus als die nicht dazwischen angeordnete Konfiguration, in welcher die Streulinse nicht zwischen der lichtemittierenden Vorrichtung und dem Reflektor angeordnet ist, gesetzt wird.

## Revendications

1. Dispositif d'éclairage pour un véhicule comprenant :
un boîtier de lampe (S) comprenant un corps de lampe (2) et un couvercle avant (4) ;
un réflecteur formant distributeur de lumière (16c) ayant une forme paraboloïde ;
un dispositif émetteur de lumière (14c) disposé sur un point focal du réflecteur, le réflecteur formant distributeur de lumière et le dispositif émetteur de lumière étant contenus dans le boîtier de lampe ;
une partie de gradation (102) qui commande un courant à fournir au dispositif émetteur de lumière, et réalise une opération de commutation de mode pour commuter dans un mode phare avec une première quantité de lumière émise depuis le dispositif émetteur de lumière et un mode feu de signalement avec une seconde quantité de lumière émise depuis le dispositif émetteur de lumière, la première quantité étant supérieure à la seconde quantité ; **caractérisé par**
une lentille de diffusion (30) qui est placée au voisinage du dispositif émetteur de lumière et peut être déplacée entre une configuration interposée et une configuration non interposée par rapport au dispositif émetteur de lumière et au réflecteur.

2. Dispositif d'éclairage pour un véhicule selon la revendication 1, dans lequel la configuration interposée et la configuration non interposée de la lentille de diffusion (30) sont liées à l'opération de commutation de mode par l'intermédiaire de la partie de gradation (102), le mode feu de signalement est réglé dans la configuration interposée dans laquelle la lentille de diffusion est interposée entre le dispositif émetteur de lumière et le réflecteur, et la mode phare est réglé dans la configuration non interposée dans laquelle la lentille de diffusion n'est pas interposée entre le dispositif émetteur de lumière et le réflecteur.
